# EUROPÄISCHE PATENTSCHRIFT

(11) **EP 3 758 321 B1**
(45) Veröffentlichungstag und Bekanntmachung des Hinweises auf die Patenterteilung: **03.05.2023**
(21) Anmeldenummer: 19183458.9
(22) Anmeldetag: 28.06.2019
(51) Int. Cl.: H04L 65/1069, H04L 65/1059, H04W 4/06, H04W 4/02, H04W 4/90

(54) **ÜBERMITTELN VON NOTRUFINFORMATIONEN**
COMMUNICATION OF EMERGENCY CALL INFORMATION
TRANSMISSION DES INFORMATIONS D'APPEL DE DÉTRESSE

(43) Veröffentlichungstag der Anmeldung: 30.12.2020
(73) Patentinhaber: Vodafone GmbH, 40549 Düsseldorf (DE)
(72) Erfinder: BROSZEIT, Marco, 40235 Düsseldorf (DE); STREHL, Kai Oliver, 45219 Essen (DE)
(74) Vertreter: Weisbrodt, Bernd

(56) Entgegenhaltungen:
- EP-A1- 2 654 025
- US-A1- 2013 163 589
- FERNANDES BRUNO ET AL: "Mobile Application for Automatic Accident Detection and Multimodal Alert", 2015 IEEE 81ST VEHICULAR TECHNOLOGY CONFERENCE (VTC SPRING), IEEE, 11. Mai 2015 (2015-05-11), Seiten 1-5, XP033167450, DOI: 10.1109/VTCSPRING.2015.7145935 [gefunden am 2015-07-01]
- "Intelligent Transport Systems (ITS); V2X Applications; Part 1: Road Hazard Signalling (RHS) application requirements specification;ITS-0010017v104", ETSI DRAFT; ITS-0010017V104, EUROPEAN TELECOMMUNICATIONS STANDARDS INSTITUTE (ETSI), 650, ROUTE DES LUCIOLES ; F-06921 SOPHIA-ANTIPOLIS ; FRANCE, Bd. ITS, Nr. V1.0.4, 14. Januar 2013 (2013-01-14), Seiten 1-43, XP014094035, [gefunden am 2013-01-14]

## Beschreibung

Die vorliegende Erfindung betrifft ein Verfahren zum Übermitteln von Notrufinformationen in einem Kommunikationsnetz sowie ein System und ein mobiles Endgerät zum Übermitteln von Notrufinformationen in einem Kommunikationsnetz.

Es ist aus dem Stand der Technik bekannt, mittels eines "eCall" (emergency call, definiert in 3GPP TS 26.267) genannten automatischen Notrufsystems für Kraftfahrzeuge einen Unfall an eine einheitliche Notrufnummer zu melden. Auf diese Weise kann sichergestellt werden, dass Rettungsmaßnahmen rasch initiiert werden.

Dabei wird bei einem Unfall ein Notruf als eCall an eine Notrufnummer ausgelöst, wobei der eCall eine Sprachverbindung zu einer Notrufzentrale aufbaut und gleichzeitig, beispielsweise mittels "In-Band"-Signalisierung, einen Minimaldatensatz (MSD: Minimal Set of Data) direkt an eine Notrufzentrale (PSAP: Public Safety Answering Point) absetzt. Dieser an die Notrufzentrale übertragene Minimaldatensatz enthält beispielsweise Informationen hinsichtlich eines Unfallzeitpunkts, Geo-Koordinaten sowie Informationen hinsichtlich eines verunfallten Fahrzeugs.

Nachteilig an der bestehen Lösung ist, dass Verzögerungen bei der Benachrichtigung der Notrufzentrale entstehen. Da im Rahmen eines eCalls eine Sprachverbindung zwischen Mobilfunkendgerät und Notrufzentrale aufgebaut wird, beispielsweise mittels eines leitungsvermittelten Datendienstes gemäß 2G-Mobilfunkstandard, kann der Aufbau einer solchen Sprachverbindung bis zu 30 Sekunden betragen. Des Weiteren ist nachteilig, dass andere Verkehrsteilnehmer überhaupt nicht auf den Unfall aufmerksam gemacht werden, so dass mitunter Folgeunfälle entstehen.

Die Veröffentlichung "Mobile Application for Automatic Accident Detection and Multimodal Alert" (Bruno Fernandes et al.) präsentiert eine Applikation für das Android-Betriebssystem, welche eine Übermittlung von fahrzeugbezogenen Informationen an benachbarte Fahrzeuge ermöglicht.

Die EP 2 654 025 A1 thematisiert Einbauort eines automatischen bordeigenen Notrufgeräts.

Die US 2013/0163589 A1 präsentiert Lösungen für notrufbezogene VoIP-911-Ortungsdienstleistungen.

Es besteht demnach die Aufgabe, Lösungen bereitzustellen, welche die aus dem Stand der Technik bekannten Nachteile vermeiden und eine verbesserte

Übermittlung von Notrufinformationen bereitstellen, so dass insbesondere andere Verkehrsteilnehmer möglichst frühzeitig gewarnt werden können.

Erfindungsgemäß wird diese Aufgabe gelöst durch ein Verfahren gemäß Patentanspruch 1.

Bei dem Kommunikationsnetz kann es sich beispielsweise um ein Mobilfunknetz handeln, insbesondere um ein Mobilfunknetz gemäß dem 2G-, 3G-, 4G- oder 5G-Standard.

Ein mobiles Endgerät kann in gleicher Weise auch als "terminal", "mobile terminal" (MT), "subscriber terminal", "station", "mobile station" (MS), "subscriber station", "user equipment" (UE) oder Mobilfunkendgerät bezeichnet werden.

Die erfindungsgemäße Lösung basiert auf der Erkenntnis, dass die Verwendung eines paketvermittelten Datendienstes Vorteile in Bezug auf eine geringere Übertragungsbandbreite, geringe Anforderungen an die Verbindungsstabilität sowie geringere Anforderungen hinsichtlich der Menge der zu übertragenden Nutzdaten mit sich bringt. Entsprechend wird seitens eines mobilen Endgerätes nicht nur ein Notrufinformationen enthaltender Datensatz im Rahmen des Aufbaues einer Sprachverbindung an eine Notrufzentrale übermittelt, sondern ein weiterer Notrufinformationen enthaltender Datensatz an einen Server übermittelt. Die Übermittlung an den Server erfolgt dabei unter Nutzung eines paketvermittelten Datendienstes, so dass der Server schnell notwendige Informationen erhält. Auf diese Weise können andere Verkehrsteilnehmer mit geringer Verzögerung informiert werden, so dass beispielsweise die Bildung einer so genannten Rettungsgasse beschleunigt werden kann.

Im Vergleich zum bisherigen Stand der Technik benötigt eine derartige Übermittlung eines Notrufinformationen enthaltenden Datensatzes an einen Server lediglich etwa 5 Millisekunden. Weitere Vorteile sind darin zu sehen, dass aufgrund der Nutzung von Datenpaketen anstatt eines Anrufs eine geringere Nutzlast auf das Kommunikationsnetz wirkt, dass paketvermittelte Datendienste geringere Anforderungen in Bezug auf Netzstabilität, Netzabdeckung und Zuverlässigkeit aufweisen und auch zuverlässiger sind, insbesondere da bei einem instabilen Netzwerk schnelle Wiederholungsversuche möglich sind.

Im vorliegenden Fall wird davon ausgegangen, dass das mobile Endgerät in einem Kraftfahrzeug installiert ist, beispielsweise Bestandteil eines fest im bzw. am Kraftfahrzeug verbauten Telematikendgerätes oder dergleichen ist, oder das mobile Endgerät zumindest kommunikativ mit dem Kraftfahrzeug verbunden ist. Auf diese Weise können beispielsweise von Sensoren des Kraftfahrzeugs erfasste Daten vom mobilen Endgerät empfangen und weiterverarbeitet werden. So kann beispielsweise das Überschreiten eines bestimmten Schwellwertes eines oder mehrerer Sensorsignale ein Ereignis, z.B. das Versenden einer Information durch das mobile Endgerät, auslösen. Bei einem Unfall des Kraftfahrzeugs kann beispielsweise ein zur Detektion von Unfallereignissen des Kraftfahrzeugs vorgesehener Sensor, beispielsweise ein sogenannter Crash-Sensor wie bei sogenannten Airbags, ein Beschleunigungssensor, ein Drucksensor oder dergleichen Sensorikelement, dazu genutzt werden, ein Triggersignal zu generieren, welches eine vorzugsweise automatische Absendung von Notrufinformationen auslöst.

Gemäß einer nicht beanspruchten Ausgestaltung erfolgt die Übermittlung des ersten Datensatzes vom mobilen Endgerät an den Server mittels einer Decentralized Environmental Notification Message (DENM) oder per Session Initiation Protocol (SIP).

Gemäß einer weiteren nicht beanspruchten Ausgestaltung wird der erste Datensatz von dem mobilen Endgerät direkt, d.h. ohne Nutzung des Kommunikationsnetzes, an wenigstens ein weiteres mobiles Endgerät übermittelt, welches sich in unmittelbarer Umgebung des sendenden mobilen Endgerätes befindet. Hierzu kann beispielsweise eine Übertragung gemäß IEEE 802.11p oder gemäß LTE-V2X mittels PC5-Schnittstelle vorgesehen sein.

Vorteilhafterweise erfolgt die Übermittlung des zweiten Datensatzes an die Notrufzentrale unter Nutzung eines leitungsvermittelten Datendienstes sowie mittels In-Band-Signalisierung, vorzugsweise während des Aufbauens einer Sprachverbindung. Die Leitungsvermittlung bzw. Durchschaltevermittlung, auch circuit switching bzw. line switching gennant, ist eine Vermittlungstechnik, bei dem einer Nachrichtenverbindung zeitweilig ein durchgeschalteter Übertragungskanal mit konstanter Bandbreite zugeordnet wird, der dieser Verbindung dann zur exklusiven Nutzung zur Verfügung steht, auch wenn keine Informationen übertragen werden. Dadurch kann die bestehende Infrastruktur einer Notrufzentrale ohne Änderungen weiter verwendet werden. Alternativ kann vorgesehen sein, dass die Übermittlung des zweiten Datensatzes an die Notrufzentrale unter Nutzung eines paketvermittelten Datendienstes erfolgt, insbesondere um Latenzzeiten zu reduzieren.

Des Weiteren kann vorteilhafterweise vorgesehen sein, dass ein Aufbauen einer Sprachverbindung von dem mobilen Endgerät zu der Notrufzentrale erfolgt. Auch dies ermöglicht die Weiternutzung einer bestehenden Infrastruktur.

Vorteilhafterweise enthält der erste Datensatz und/oder der zweite Datensatz weniger Daten als für ein Minimum Set of Data (MSD) in 3GPP TS 26.267 definiert ist. Während der eCall-Standard insbesondere gemäß 3GPP TS 26.267 vorsieht, dass mittels "In-Band"-Signalisierung, ein Minimaldatensatz (MSD: Minimal Set of Data) direkt an eine Notrufzentrale (PSAP: Public Safety Answering Point) absetzbar sein muss, ist es erfindungsgemäß möglich hiervon abzuweichen und insbesondere mittels eines paketvermittelten Datendienstes weniger Daten zu übermitteln als für ein Minimum Set of Data (MSD) in 3GPP TS 26.267 definiert ist.

Eine weitere vorteilhafte Ausgestaltung der Erfindung sieht vor, dass die Übermittlung des zweiten Datensatzes unter Nutzung eines paketvermittelten Datendienstes erfolgt.

Vorzugsweise ist der Server ein Geolokationsdaten verarbeitender Server. Ein solcher Server ermöglicht es, dass erste und/oder zweite Datensätze dazu genutzt werden können, Informationen an andere Endgeräte, insbesondere an Endgeräte anderer Verkehrsteilnehmer, zu senden.

Der Server kann entweder ein Bestandteil, d.h. eine Netzkomponente, des Kommunikationsnetzes sein oder alternativ einem anderen Netz oder einer anderen Informationen bereitstellenden Einrichtung zugeordnet sein, jedoch mit dem Kommunikationsnetz in Verbindung stehen.

Erfindungsgemäß ist ein Extrahieren von Daten aus dem zweiten Datensatz durch eine Einrichtung der Notrufzentrale und ein Übermitteln der extrahierten Daten von der Notrufzentrale an den Server vorgesehen. Dies hat den Vorteil, dass trotz möglicher Probleme in der direkten Übermittlung des ersten Datensatzes von dem mobilen Endgerät an den Server benötigte Informationen dennoch an den Server bereitgestellt werden können. Seitens der Notrufzentrale werden dabei sensible Daten, welche nicht an andere mobile Endgeräte mitgeteilt werden sollen, aus dem ersten Datensatz entfernt und der um diese Daten bereinigte Datensatz an den Server übermittelt. Alternativ zur Extraktion sensibler Daten kann auch vorgesehen sein, dass sensible Daten durch sogenannte Dummy-Daten, welche als Platzhalter für sensible Daten fungieren, ersetzt werden. Vorzugsweise erfolgt das Übermitteln der extrahierten Daten ebenfalls mittels einer Decentralized Environmental Notification Message-Nachricht. Sensible Daten bzw. Informationen im Sinne der vorliegenden Erfindung sind beispielsweise Daten bzw. Informationen zu Kennzeichen des Fahrzeugs, Anzahl der Insassen, Schwere des Unfalls und/oder dergleichen.

Anschließend werden die seitens des Servers empfangenen Daten erfindungsgemäß dazu genutzt, um eine Warnmeldung an weitere sich im Kommunikationsnetz befindende mobile Endgeräte auszusenden, wobei vorzugsweise die Geolokationsdaten oder wenigstens eine Zellinformation(Cell-ID) des mobilen Endgerätes berücksichtigt werden. Hierbei erfolgt das Aussenden der Warnmeldung entweder auf Basis des direkt vom mobilen Endgerät empfangenen ersten Datensatzes bzw. einer Kopie oder eines Teils desselben oder auf Basis der durch die Notrufzentrale extrahierten Daten, welche auf dem empfangenen zweiten Datensatz beruhen.

Vorteilhafterweise erfolgt das Aussenden der Warnmeldung durch den Server innerhalb wenigstens einer Funknetzzelle des Kommunikationsnetzes - nachfolgend auch Zelle genannt - mittels Multicast oder Broadcast, vorzugsweise unter Nutzung der sogenannten Cell-ID der Zelle des Kommunikationsnetzes, in der sich das mobile Endgerät beim Absenden der Notrufinformationen befindet.

Auch kann vorgesehen sein, dass der Server das Aussenden veranlasst bzw. triggert, so dass die Warnmeldung von einer anderen Einrichtung des Kommunikationsnetzes zusammengesetzt und versendet wird. Auf diese Weise kann sichergestellt werden, dass nur die mobilen Endgeräte von Teilnehmern einer oder mehrerer Zellen des Kommunikationsnetzes die Warnmeldung erhalten, wenn diese sich in örtlicher Nähe zu dem mobilen Endgerät befinden, das den ersten und zweiten Datensatz abgesendet hat.

Erfindungsgemäß ist weiter vorgesehen, dass der erste Datensatz und/oder der zweite Datensatz Informationen zu geografischen Koordinaten des mobilen Endgeräts, Informationen zu einem Unfallzeitpunkt und/oder Informationen zu einem verunfallten Fahrzeug enthalten.

Die vorstehend genannte Aufgabe wird weiterhin gelöst durch ein System gemäß Patentanspruch 10.

Die Notrufzentrale ferner dazu eingerichtet, Daten aus dem zweiten Datensatz zu extrahieren und die extrahierten Daten an den Server zu übermitteln.

Es ist ferner vorgesehen, dass der Geolokationsdaten verarbeitende Server Geolokationsdaten oder dergleichen Informationen des mobilen Endgerätes direkt an die Notrufzentrale übermittelt, so dass diese insbesondere nicht seitens der Notrufzentrale aus dem Datensatz extrahiert werden müssten.

Bei dem Kommunikationsnetz kann es sich, wie bereits erläutert, beispielsweise um ein Mobilfunknetz handeln, insbesondere um ein Mobilfunknetz gemäß dem 2G-, 3G-, 4G- oder 5G-Standard.

Besonders bevorzugt ist der Server ferner dazu eingerichtet, eine Warnmeldung an weitere sich im Kommunikationsnetz befindende mobile Endgeräte auszusenden oder die Aussendung zu veranlassen bzw. zu triggern, vorzugsweise unter Berücksichtigung der Geolokationsdaten oder wenigstens einer Zellinformation (Cell-ID) des mobilen Endgerätes. Vorteilhafterweise erfolgt das Aussenden der Warnmeldung innerhalb wenigstens einer Funknetzzelle des Kommunikationsnetzes - nachfolgend auch Zelle genannt - mittels Multicast oder Broadcast, vorzugsweise unter Nutzung der sogenannten Cell-ID der Zelle des Kommunikationsnetzes, in der sich das mobile Endgerät beim Absenden der Notrufinformationen befindet. Auf diese Weise kann, wie bereits erläutert, sichergestellt werden, dass nur die mobilen Endgeräte von Teilnehmern einer oder mehrerer Zellen des Kommunikationsnetzes die Warnmeldung erhalten, wenn diese sich in örtlicher Nähe zu dem mobilen Endgerät befinden, das den ersten und zweiten Datensatz abgesendet hat.

Wie bereits erläutert, wird vorteilhafterweise der erste Datensatz von dem mobilen Endgerät direkt, d.h. ohne Nutzung des Kommunikationsnetzes, an wenigstens ein weiteres mobiles Endgerät übermittelt, welches sich in unmittelbarer Umgebung des sendenden mobilen Endgerätes befindet. Hierzu kann beispielsweise eine Übertragung gemäß IEEE 802.11p oder gemäß LTE-V2X mittels PC5-Schnittstelle vorgesehen sein. Erfindungsgemäß kann so der erste Datensatz mittels Direktverbindung zwischen den mobilen Endgeräten von einem sich in einer Notfallsituation befindenden mobilen Endgerät an wenigstens ein weiteres mobiles Endgerät übermittelt werden. Eine derartige Direktverbindung ist beispielsweise über Entfernungen von bis zu 500 m zwischen den Endgeräten möglich. Auch kann erfindungsgemäß vorgesehen sein, dass ein mittels Direktverbindung von einem verunfallten Endgerät seitens eines Endgeräts empfangener erster Datensatz mittels Direktverbindung an weitere Endgeräte übermittelt werden, beispielsweise um diese frühzeitig über eine etwaige Gefahrenlage zu informieren.

Vorteilhafterweise ist das erfindungsgemäße System zur Umsetzung des erfindungsgemäßen Verfahrens ausgebildet bzw. eingerichtet.

Ein nicht beanspruchter Aspekt betrifft ein mobiles Endgerät, umfassend eine Sende- und Empfangseinheit sowie einen mit der Sende- und Empfangseinheit verbundenen Prozessor, wobei der Prozessor dazu eingerichtet ist
mittels der Sende- und Empfangseinheit einen ersten Datensatz an einen über das Kommunikationsnetz erreichbaren Server unter Nutzung eines paketvermittelten Datendienstes des Kommunikationsnetzes zu übermitteln, wobei der erste Datensatz erste Notrufinformationen enthält,
   und
mittels der Sende- und Empfangseinheit einen zweiten Datensatz von dem mobilen Endgerät an eine Notrufzentrale des Kommunikationsnetzes zu übermitteln, wobei der zweite Datensatz zweite Notrufinformationen enthält.

Vorteilhafterweise ist der Prozessor des mobilen Endgerätes bzw. das mobile Endgerät ferner dazu eingerichtet, zur Übermittlung des ersten Datensatzes zum Server eine Decentralized Environmental Notification Message (DENM) zu erzeugen.

Vorteilhafterweise ist der Prozessor des mobilen Endgerätes bzw. das mobile Endgerät zur Übermittlung des zweiten Datensatzes mittels MSD ausgebildet bzw. eingerichtet.

Vorteilhafterweist enthält der erste Datensatz und/oder der zweite Datensatz weniger Daten als für ein Minimum Set of Data (MSD) in 3GPP TS 26.267 definiert ist.

Eine weitere vorteilhafte Ausgestaltung der Erfindung sieht vor, dass der Prozessor des mobilen Endgerätes bzw. das mobile Endgerät ferner dazu eingerichtet ist, den ersten Datensatz direkt von dem mobilen Endgerät an wenigstens ein weiteres mobiles Endgerät zu übermitteln, vorzugsweise mit eine Direktverbindung zwischen den mobilen Endgeräten ohne Nutzung des Kommunikationsnetzes. Eine derartige Direktverbindung ist beispielsweise über Entfernungen von bis zu 500 m zwischen den Endgeräten möglich. Auch kann erfindungsgemäß vorgesehen sein, dass ein mittels Direktverbindung von einem verunfallten Endgerät seitens eines Endgeräts empfangener erster Datensatz mittels Direktverbindung an weitere Endgeräte übermittelt werden, beispielsweise um diese frühzeitig über eine etwaige Gefahrenlage zu informieren.

Vorteilhafterweise ist das erfindungsgemäße mobile Endgerät zur Umsetzung des erfindungsgemäßen Verfahrens in bzw. mit einem erfindungsgemäßen System ausgebildet bzw. eingerichtet.

Weitere Einzelheiten, Merkmale und Vorteile der Erfindung werden nachfolgend anhand der in den Figuren der Zeichnungen dargestellten Ausführungsbeispiele näher erläutert. Dabei zeigen:
- Fig. 1: eine schematische Übersicht eines Kommunikationsnetzes, in welchem Notrufinformationen übermittelt werden;
- Fig. 2: ein Ablaufdiagramm zur Kommunikation zwischen einem mobilen Endgerät und einem Server; und
- Fig. 3: ein Ablaufdiagramm zur Kommunikation zwischen einem mobilen Endgerät und einer Notrufzentrale sowie zwischen der Notrufzentrale und einem Server.

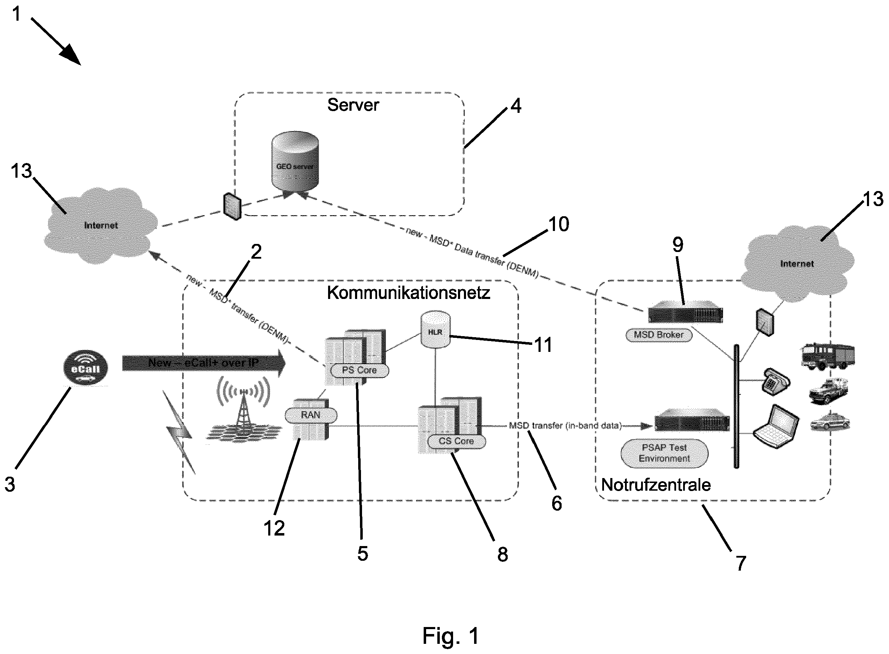

Fig. 1 zeigt die schematische Übersicht eines Kommunikationsnetzes 1, in welchem seitens eines mobilen Endgerätes 3 versendete Notrufinformationen transportiert und verarbeitet werden. Das mobile Endgerät 3 ist beispielsweise in einem Fahrzeug montiert bzw. mit diesem verbunden und über ein Radio Access Network (RAN) 12 an das Kommunikationsnetz 1 angebunden. Teilnehmerrelevante Informationen werden seitens eines Registers, welches Teilnehmerdaten von Teilnehmern des Kommunikationsnetzes 1 speichert, bereitgestellt bzw. bereitgehalten, beispielsweise in einem sogenannten ein Home Location Register (HLR) 11 oder - hier nicht dargestellt - in einem Home Subscriber Server (HSS) oder einer dergleichen Teilnehmerinformationen bereithaltenden Einrichtung des Kommunikationsnetzes. Die Notrufinformationen können ferner beispielsweise Informationen zu geografischen Koordinaten des mobilen Endgeräts 3, Informationen zu einem Unfallzeitpunkt und/oder Informationen zu einem verunfallten Fahrzeug, in welchem sich das mobile Endgerät befindet, umfassen. Durch Bereitstellung von derartigen Notrufinformationen mittels eines Servers 4 können andere Verkehrsteilnehmer vor Gefahrensituationen gewarnt werden.

Sofern das Fahrzeug, in welchem sich das mobile Endgerät befindet, verunfallt, wird vorzugsweise automatisch ein als "eCall" genannter Notruf abgesendet. Es kann auch vorgesehen sein, dass der Notruf manuell abgesendet wird, beispielsweise von einem Fahrer eines Kraftfahrzeugs in einer anderweitigen Notsituation. Seitens des Endgerätes bzw. des Kraftfahrzeugs in dem das Endgerät verbaut ist, kann dazu ein Schalter, Taster oder dergleichen Auslösemittel vorgesehen sein. Der Notruf umfasst das Übermitteln eines ersten Datensatzes 2, enthaltend ein "Minimum Set of Data" (MSD) ohne sensible Informationen, unter Nutzung eines paketvermittelten Datendienstes 5 des Kommunikationsnetzes 1, direkt vom mobilen Endgerät 3 an den Server 4. Diese Übermittlung erfolgt dabei vorzugsweise mittels einer Decentralized Environmental Notification Message (DENM). Alternativ kann jedoch auch der Einsatz des Session Initiation Protocol (SIP) vorgesehen sein.

Des Weiteren wird ein zweiter Datensatz 6 von dem mobilen Endgerät 3 an eine Notrufzentrale 7 des Kommunikationsnetzes 1 übermittelt, wobei der zweite Datensatz 6 ebenfalls Notrufinformationen enthält, beispielsweise ebenfalls ein "Minimum Set of Data" (MSD). Sofern an einer bestehenden eCall-Infrastruktur hinsichtlich einer Notrufzentrale 7 nichts geändert werden soll, erfolgt die Übermittlung des zweiten Datensatzes 6 unter Nutzung eines leitungsvermittelten Datendienstes 8 und mittels In-Band-Signalisierung. Eine derartige Übermittlung des zweiten Datensatzes 6 ist vorteilhaft, da bei einem Notruf ohnehin eine Sprachverbindung vom mobilen Endgerät 3 zu der Notrufzentrale 7 aufgebaut wird. Sofern die Notrufzentrale den Aufbau einer Sprachverbindung zu derselben mittels eines paketvermittelten Datendienstes 5 unterstützt, kann der zweite Datensatz 6 vorteilhafterweise auch unter Nutzung eines solchen paketvermittelten Datendienstes 5 an die Notrufzentrale 7 gesendet werden.

Obschon der Server 4 bereits Notrufinformationen in einem ersten Datensatz 2 vom mobilen Endgerät 3 erhalten hat, kann es vorteilhaft sein, Notrufinformationen ebenfalls von der Notrufzentrale 7 bereitzustellen. Dies ist beispielsweise bei Übertragungsproblemen der Fall oder falls der Betreiber des Kommunikationsnetzes 1 nur wenige Änderungen an einer bestehenden Netzinfrastruktur vornehmen möchte. Zu diesem Zweck ist optional vorgesehen, dass eine Einrichtung 9 der Notrufzentrale 7 Daten aus dem zweiten Datensatz 6 extrahiert, um mitunter sensible Daten nicht an Server 4 zu übertragen, und anschließend die extrahierten Daten 10 von der Notrufzentrale 7 an den Server 4 übermittelt. Diese Übermittlung kann ebenfalls mittels einer DENM erfolgen oder aber per SIP erfolgen. Um Latenzzeiten gering zu halten, wird zur Übermittlung ferner ein paketvermittelter Datendienst 5 genutzt.

Nachdem der Server 4 auf wenigstens eine der vorgenannten Weisen Notrufinformationen seitens des mobilen Endgerätes 3 erhalten hat, sendet dieser eine Warnmeldung an weitere sich im Kommunikationsnetz 1 befindende mobile Endgeräte aus oder veranlasst bzw. triggert die Aussendung. Das Aussenden erfolgt vorteilhafterweise innerhalb wenigstens einer Zelle des Kommunikationsnetzes 1 mittels Multicast oder Broadcast. Auf diese Weise können beispielsweise andere Verkehrsteilnehmer frühzeitig vor Unfällen gewarnt werden.

Der erste Datensatz kann ferner von dem mobilen Endgerät mittels Direktverbindung von einem sich in einer Notfallsituation befindenden mobilen Endgerät an wenigstens ein weiteres mobiles Endgerät übermittelt werden. Eine derartige Direktverbindung ist beispielsweise über Entfernungen von bis zu 500 m zwischen den Endgeräten möglich. Auch kann ein mittels Direktverbindung von einem verunfallten Endgerät seitens eines Endgeräts empfangener erster Datensatz mittels Direktverbindung an weitere Endgeräte übermittelt werden, beispielsweise um diese frühzeitig über eine etwaige Gefahrenlage zu informieren. So lässt sich die Entfernung zwischen den Endgeräten weiter vergrößern.

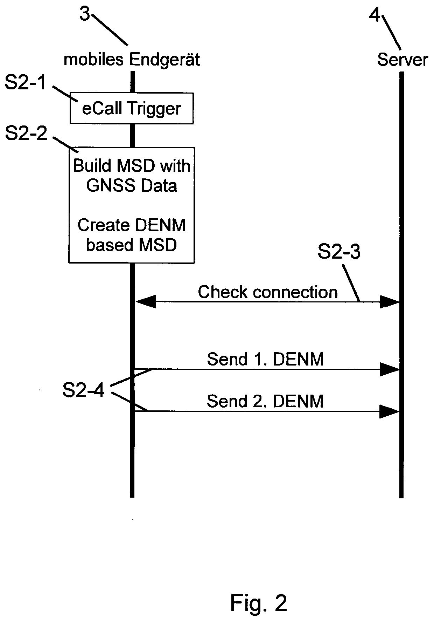

Fig. 2 zeigt ein Ablaufdiagramm zur Kommunikation zwischen dem mobilen Endgerät 3 und dem Server 4. Dabei wird gemäß Schritt S2-1 zunächst seitens des mobilen Endgerätes 3 ein eCall-Notruf ausgelöst, beispielsweise nachdem Messwerte von sich in einem Fahrzeug befindenden Sensoren (z.B. ein Beschleunigungssensor) seitens des mobilen Endgerätes 3 erhalten wurden. Bei Überschreiten eines bestimmten Schwellwertes eines oder mehrerer Sensorsignale kann ein Ereignis, z.B. das Versenden einer Information durch das mobile Endgerät, ausgelöst werden. Bei einem Unfall des Kraftfahrzeugs kann beispielsweise ein zur Detektion von Unfallereignissen des Kraftfahrzeugs vorgesehener Sensor, beispielsweise ein sogenannter Crash-Sensor wie bei sogenannten Airbags, ein Beschleunigungssensor, ein Drucksensor oder dergleichen Sensorikelement, dazu genutzt werden, ein Triggersignal zu generieren, welches für eine vorzugsweise automatische Absendung von Notrufinformationen nutzbar ist.

Gemäß Schritt S2-2 wird ein erster Datensatz 2 erstellt, welcher erste Notrufinformationen enthält. Da dieser Datensatz 2 an den Server 4 gesendet wird, sollte dieser Datensatz 2 keine sensiblen Informationen wie beispielsweise Information zu Kennzeichen des Fahrzeugs, Anzahl der Insassen, Schwere des Unfalls und dergleichen enthalten. Wichtig sind vorliegend jedoch Informationen zu Geolokationsdaten. Informationen zu Geolokationsdaten liefern beispielsweise GPS, Galileo, GLONASS oder Beidou-Koordinaten oder Informationen zur Zelle, in welcher sich das die Notrufinformationen absendende mobile Endgerät befindet bzw. befunden hat. Erfindungsgemäß kann dazu vorteilhafterweise die sogenannte Cell-ID des Kommunikationsnetzes oder dergleichen Information genutzt werden. Anhand der Cell-ID bzw. Cell-IDs oder dergleichen Information sind zugehörige Geolokationsdaten seitens des Kommunikationsnetzes bekannt bzw. ermittelbar. Ferner lassen sich mittels der Geolokationsdaten beispielsweise Informationen zur Fahrtrichtung des verunfallten Fahrzeugs ermitteln bzw. bestimmen. Zur Erhöhung der Genauigkeit der Geolokationsdaten kann auch eine Kombination mehrerer solcher Daten vorgesehen sein.

Anschließend wird in Schritt S2-3 getestet, ob eine Verbindung zwischen dem mobilen Endgerät 3 und dem Server 4 besteht. Nach erfolgter Verbindungsprüfung wird der erste Datensatz 2 von dem mobilen Endgerät 3 an den Server 4 des Kommunikationsnetzes 1 übermittelt, nämlich unter Nutzung eines paketvermittelten Datendienstes 5 des Kommunikationsnetzes 1. Der erste Datensatz 2 enthält dabei erste Notrufinformationen.

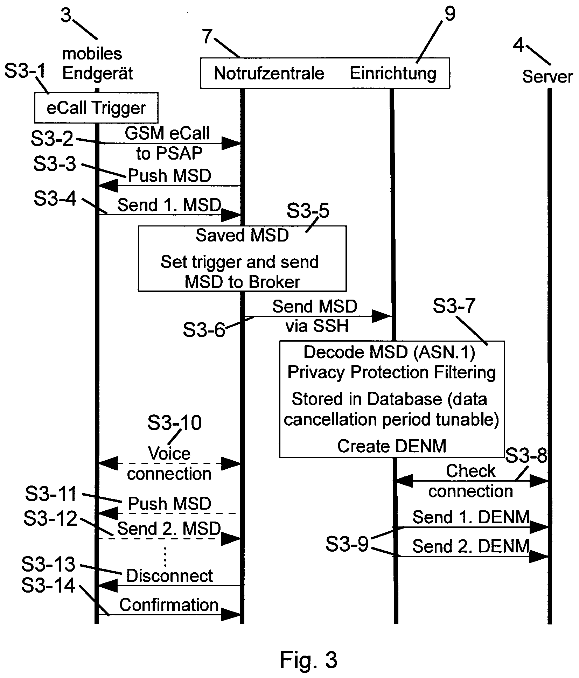

Fig. 3 zeigt ein Ablaufdiagramm zur jeweiligen Kommunikation zwischen dem mobilen Endgerät 3 und der Notrufzentrale 7 sowie zwischen der Notrufzentrale 7 und einem Server 4. Gemäß Schritt S3-1 wird zunächst seitens des mobilen Endgerätes 3 ein eCall-Notruf ausgelöst wie bereits vorstehend beschrieben wurde. Diese Auslösung bewirkt, dass ein eCall mittels GSM vom mobilen Endgerät 3 zur Notrufzentrale 7 als Sprachverbindung initiiert wird. Nachdem der Verbindungsaufbau initiiert wurde, fordert die Notrufzentrale 7 gemäß Schritt S3-3 die Übermittlung des zweiten Datensatzes 6, welcher zweite Notrufinformationen enthält, von dem mobilen Endgerät 3 an. Dieser zweite Datensatz 6 enthält auch sensible Informationen, welche für mit der Notrufzentrale in Kontakt stehende Rettungskräfte von Feuerwehr, Polizei und dergleichen hilfreich sind.

Der zweite Datensatz 6 wird gemäß Schritt S3-4 im Rahmen einer In-Band-Signalisierung während des Aufbaus einer Sprachverbindung an die Notrufzentrale 7 übermittelt. Nach Erhalt des zweiten Datensatzes 6 wird in Schritt S3-5 selbiger von der Notrufzentrale 7 gespeichert und gemäß Schritt S3-6 einer Einrichtung 9 der Notrufzentrale 7 übergeben, welche die sensiblen Daten aus dem zweiten Datensatz 6 in Schritt S3-7 extrahiert. Im Rahmen der Extraktion werden die extrahierten Daten 10 zum einen seitens der Einrichtung 9 abgespeichert und zum anderen für die Übermittlung zum Server 4 vorbereitet, indem eine DENM-Nachricht erzeugt wird. Alternativ zum vorgenannten Extraktionsschritt kann auch vorgesehen sein, dass die sensiblen Daten durch sogenannte Dummy-Daten ersetzt werden.

In Schritt S3-8 erfolgt eine Verbindungsprüfung zwischen der Einrichtung 9 der Notrufzentrale 7 und dem Server 4, bevor die extrahierten Daten 10 in Schritt S3-9 an den Server 4 übermittelt werden. Nachdem eine Übermittlung der extrahierten Daten 10 an den Server 4 erfolgte, wird der Server dazu in die Lage versetzt, andere Verkehrsteilnehmer per Warnnachricht zu informieren. Dazu setzt der Server 4 eine entsprechende Warnnachricht zusammen und versendet diese mittels Broadcast oder Multicast an sich in einer Zelle des Kommunikationsnetzes 1 befindende mobile Endgeräte oder veranlasst bzw. triggert die Zusammenstellung und Versendung.

Aufgrund des zuvor in Schritt S3-2 initiierten Aufbaus einer Sprachverbindung erfolgt eine Herstellung derselben gemäß Schritt S3-10, so dass Insassen eines verunfallten Fahrzeugs mit Mitarbeitern der Notrufzentrale 7 kommunizieren können.

Optional kann vorgesehen sein, dass die Notrufzentrale 7 gemäß Schritt S3-11 die Übermittlung eines weiteren Datensatzes, welcher Notrufinformationen enthält, von dem mobilen Endgerät 3 anfordert. Auch dieser weitere Datensatz kann gemäß Schritt S3-12, insbesondere ebenfalls im Rahmen einer In-Band-Signalisierung, an die Notrufzentrale 7 übermittelt werden.

Nach erfolgreicher Tätigung des Notrufs wird gemäß Schritt S3-13 eine Anfrage zur Trennung der aufgebauten Sprachverbindung seitens der Notrufzentrale an das mobile Endgerät 3 gesendet, welche letztlich in Schritt S3-14 seitens des mobilen Endgerätes 3 bestätigt wird.

Die in den Figuren der Zeichnung dargestellten Ausführungsbeispiele und die im Zusammenhang mit diesen erläuterten Ausführungsbeispiele dienen lediglich einer Erläuterung der Erfindung und sind für die nicht beschränkend.

### Bezugszeichenliste:

- 1: Kommunikationsnetz
- 2: erster Datensatz
- 3: mobiles Endgerät
- 4: Server
- 5: paketvermittelter Datendienst
- 6: zweiter Datensatz
- 7: Notrufzentrale
- 8: leitungsvermittelter Datendienst
- 9: Einrichtung der Notrufzentrale
- 10: extrahierte Daten
- 11: Home Location Register
- 12: Radio Access Network
- 13: Internet
- S2-1 bis S2-4: Verfahrensschritt
- S3-1 bis S3-14: Verfahrensschritt

## Patentansprüche

1. Verfahren zum Übermitteln von Notrufinformationen in einem Kommunikationsnetz (1), umfassend die Schritte:
- Übermitteln eines ersten Datensatzes (2) von einem mobilen Endgerät (3) an einen über das Kommunikationsnetz (1) erreichbaren Server (4) unter Nutzung eines paketvermittelten Datendienstes (5) des Kommunikationsnetzes (1), wobei der erste Datensatz (2) erste Notrufinformationen enthält,
- Übermitteln eines zweiten Datensatzes (6) von dem mobilen Endgerät (3) an eine Notrufzentrale (7) des Kommunikationsnetzes (1), wobei der zweite Datensatz (6) zweite Notrufinformationen enthält, wobei zum Übermitteln des ersten Datensatzes (2) ein Extrahieren von Daten aus dem zweiten Datensatz (6) durch eine Einrichtung (9) der Notrufzentrale (7) und ein Übermitteln der extrahierten Daten (10) von der Notrufzentrale (7) an den Server (4) erfolgt, und
- Aussenden einer Warnmeldung von dem Server (4) oder veranlasst von dem Server (4) an weitere sich im Kommunikationsnetz (1) befindende mobile Endgeräte.

2. Verfahren nach Anspruch 1, wobei der erste Datensatz (2) und/oder der zweite Datensatz (6) weniger Daten enthält als für ein Minimum Set of Data, MSD, in 3GPP TS 26.267 definiert ist.

3. Verfahren nach Anspruch 1 oder Anspruch 2, wobei die Übermittlung des zweiten Datensatzes (6) während des Aufbauens einer Sprachverbindung von dem mobilen Endgerät (3) zu der Notrufzentrale (7) unter Nutzung eines leitungsvermittelten Datendienstes (8) sowie mittels In-Band-Signalisierung erfolgt.

4. Verfahren nach Anspruch 1 oder Anspruch 2, wobei die Übermittlung des zweiten Datensatzes (6) unter Nutzung eines paketvermittelten Datendienstes (5) erfolgt.

5. Verfahren nach einem der Ansprüche 1 bis 4, wobei der Server (4) ein Geolokationsdaten verarbeitender Server ist.

6. Verfahren nach einem der Ansprüche 1 bis 5, wobei das Übermitteln der extrahierten Daten mittels einer Decentralized Environmental Notification Message, DENM, erfolgt.

7. Verfahren nach einem der Ansprüche 1 bis 6, wobei zum Aussenden der Warnmeldung Geolokationsdaten oder wenigstens eine Zellinformation des mobilen Endgerätes (3) berücksichtigt werden.

8. Verfahren nach Anspruch 7, wobei das Aussenden innerhalb wenigstens einer Zelle des Kommunikationsnetzes (1) mittels Multicast oder Broadcast erfolgt.

9. Verfahren nach einem der Ansprüche 1 bis 8, wobei der erste Datensatz (2) und/oder der zweite Datensatz (6) wenigstens eine der folgenden Informationen enthalten: Informationen zu geografischen Koordinaten des mobilen Endgeräts (3), Informationen zu einem Unfallzeitpunkt, Informationen zu einem verunfallten Fahrzeug.

10. System zum Übermitteln von Notrufinformationen in einem Kommunikationsnetz (1), umfassend:
- ein mobiles Endgerät (3), welches dazu eingerichtet ist, einen erste Notrufinformationen enthaltenden ersten Datensatz (2) unter Nutzung eines paketvermittelten Datendienstes (5) des Kommunikationsnetzes (1) und einen zweite Notrufinformationen enthaltenden zweiten Datensatz (6) zu versenden,
- einen über das Kommunikationsnetz (1) erreichbaren Server (4), welcher dazu eingerichtet ist, den ersten Datensatz (2) zu empfangen,
- eine Notrufzentrale (7), welche dazu eingerichtet ist, den zweiten Datensatz (6) zu empfangen und zum Versenden des ersten Datensatzes (2) Daten aus dem zweiten Datensatz (6) zu extrahieren und die extrahierten Daten (10) an den Server (4) zu übermitteln, und
- der Server (4), welcher dazu eingerichtet ist, eine Warnmeldung an weitere sich im Kommunikationsnetz (1) befindende mobile Endgeräte auszusenden oder eine solche Aussendung zu veranlassen.

11. System nach Anspruch 10, wobei die Aussendung unter Berücksichtigung von Geolokationsdaten oder wenigstens einer Zellinformation des mobilen Endgerätes (3) erfolgt.

12. System nach Anspruch 11, wobei das Aussenden innerhalb wenigstens einer Zelle des Kommunikationsnetzes (1) mittels Multicast oder Broadcast erfolgt.

## Claims

1. Method for transmitting emergency call information in a communication network (1), comprising the steps:
- transmitting a first data record (2) from a mobile terminal (3) to a server (4) accessible via the communication network (1) using a packet-switched data service (5) of the communication network (1), the first data record (2) containing first emergency call information,
- transmitting a second data record (6) from the mobile terminal (3) to an emergency call centre (7) of the communications network (1), the second data record (6) containing second emergency call information, data being extracted from the second data record (6) by a device (9) of the emergency call centre (7) and the extracted data (10) being transmitted from the emergency call centre (7) to the server (4) in order to transmit the first data record (2), and
- sending a warning message from the server (4) or initiated by the server (4) to further mobile terminals located in the communication network (1).

2. Method according to claim 1, wherein the first data set (2) and/or the second data set (6) contains less data than defined for a Minimum Set of Data, MSD, in 3GPP TS 26.267.

3. Method according to claim 1 or claim 2, wherein the transmission of the second data set (6) takes place during the establishment of a voice connection from the mobile terminal (3) to the emergency call centre (7) using a circuit-switched data service (8) and by means of in-band signalling.

4. Method according to claim 1 or claim 2, wherein the transmission of the second data set (6) takes place using a packet-switched data service (5).

5. Method according to any one of claims 1 to 4, wherein the server (4) is a geolocation data processing server.

6. Method according to any one of claims 1 to 5, wherein the transmission of the extracted data is performed by means of a Decentralized Environmental Notification Message, DENM.

7. Method according to any one of claims 1 to 6, wherein geolocation data or at least one cell information of the mobile terminal (3) is taken into account for transmitting the warning message.

8. Method according to claim 7, wherein the transmission within at least one cell of the communication network (1) takes place by means of multicast or broadcast.

9. Method according to any one of claims 1 to 8, wherein the first data record (2) and/or the second data record (6) contain at least one of the following information: Information on geographical coordinates of the mobile terminal (3), Information on a time of accident, Information on a vehicle involved in an accident.

10. System for transmitting emergency call information in a communication network (1), comprising:
- a mobile terminal (3) which is set up to send a first data record (2) containing first emergency call information using a packet-switched data service (5) of the communication network (1) and a second data record (6) containing second emergency call information,
- a server (4) accessible via the communication network (1), which is set up to receive the first data set (2),
- an emergency call centre (7) arranged to receive the second data set (6) and to extract data from the second data set (6) for sending the first data set (2) and to transmit the extracted data (10) to the server (4), and
- the server (4), which is set up to transmit a warning message to further mobile terminals located in the communication network (1) or to initiate such a transmission.

11. System according to claim 10, wherein the transmission takes place taking into account geolocation data or at least one cell information of the mobile terminal (3).

12. System according to claim 11, wherein the transmission within at least one cell of the communication network (1) takes place by means of multicast or broadcast.

## Revendications

1. Procédé de transmission d'informations d'appel d'urgence dans un réseau de communication (1), comprenant les étapes consistant à:
- transmettre un premier ensemble de données (2) d'un terminal mobile (3) à un serveur (4) accessible par le réseau de communication (1) en utilisant un service de données à commutation de paquets (5) du réseau de communication (1), le premier ensemble de données (2) contenant des premières informations d'appel d'urgence,
- transmettre un deuxième ensemble de données (6) du terminal mobile (3) à un centre d'appel d'urgence (7) du réseau de communication (1), le deuxième ensemble de données (6) contenant des deuxièmes informations d'appel d'urgence, une extraction de données du deuxième ensemble de données (6) par un dispositif (9) du centre d'appel d'urgence (7) et une transmission des données extraites (10) du centre d'appel d'urgence (7) au serveur (4) étant effectuées pour transmettre le premier ensemble de données (2), et
- l'envoi d'un message d'alerte par le serveur (4) ou provoqué par le serveur (4) à d'autres terminaux mobiles se trouvant dans le réseau de communication (1).

2. Procédé selon la revendication 1, dans lequel le premier ensemble de données (2) et/ou le deuxième ensemble de données (6) contient moins de données que ce qui est défini pour un ensemble minimal de données, MSD, dans 3GPP TS 26.267.

3. Procédé selon la revendication 1 ou la revendication 2, dans lequel la transmission du deuxième jeu de données (6) a lieu pendant l'établissement d'une liaison vocale entre le terminal mobile (3) et le centre d'appel d'urgence (7) en utilisant un service de données à commutation de circuits (8) ainsi qu'au moyen d'une signalisation dans la bande.

4. Procédé selon la revendication 1 ou la revendication 2, dans lequel la transmission du deuxième ensemble de données (6) s'effectue en utilisant un service de données à commutation de paquets (5).

5. Procédé selon l'une quelconque des revendications 1 à 4, dans lequel le serveur (4) est un serveur de traitement de données de géolocalisation.

6. Procédé selon l'une des revendications 1 à 5, dans lequel la transmission des données extraites est effectuée au moyen d'un message de notification environnementale décentralisée, DENM.

7. Procédé selon l'une des revendications 1 à 6, dans lequel, pour émettre le message d'alerte, on prend en compte des données de géolocalisation ou au moins une information cellulaire du terminal mobile (3).

8. Procédé selon la revendication 7, dans lequel l'émission à l'intérieur d'au moins une cellule du réseau de communication (1) est effectuée au moyen d'une multidiffusion ou d'une diffusion.

9. Procédé selon l'une des revendications 1 à 8, dans lequel le premier ensemble de données (2) et/ou le deuxième ensemble de données (6) contiennent au moins l'une des informations suivantes: des informations relatives aux coordonnées géographiques du terminal mobile (3), des informations relatives à un moment d'accident, des informations relatives à un véhicule accidenté.

10. Système de transmission d'informations d'appel d'urgence dans un réseau de communication (1), comprenant:
- un terminal mobile (3) qui est conçu pour envoyer un premier ensemble de données (2) contenant des premières informations d'appel d'urgence en utilisant un service de données à commutation de paquets (5) du réseau de communication (1) et un deuxième ensemble de données (6) contenant des deuxièmes informations d'appel d'urgence,
- un serveur (4) accessible par le réseau de communication (1), qui est conçu pour recevoir le premier jeu de données (2),
- un centre d'appels d'urgence (7) qui est conçu pour recevoir le deuxième ensemble de données (6) et, pour envoyer le premier ensemble de données (2), pour extraire des données du deuxième ensemble de données (6) et pour transmettre les données extraites (10) au serveur (4), et
- le serveur (4), qui est conçu pour envoyer un message d'avertissement à d'autres terminaux mobiles se trouvant dans le réseau de communication (1) ou pour provoquer un tel envoi.

11. Système selon la revendication 10, dans lequel l'émission est effectuée en tenant compte de données de géolocalisation ou d'au moins une information cellulaire du terminal mobile (3).

12. Système selon la revendication 11, dans lequel l'émission à l'intérieur d'au moins une cellule du réseau de communication (1) est effectuée au moyen d'une multidiffusion ou d'une diffusion.
